**Europäisches Patentamt**

**European Patent Office**

**Office européen des brevets**

(19)

(11) Veröffentlichungsnummer : **0 403 477 B1**

(12)

# EUROPÄISCHE PATENTSCHRIFT

(45) Veröffentlichungstag der Patentschrift :
**10.03.93 Patentblatt 93/10**

(51) Int. Cl.⁵ : **B41J 2/35,** G01D 15/10

(21) Anmeldenummer : **88908156.8**

(22) Anmeldetag : **30.09.88**

(86) Internationale Anmeldenummer :
**PCT/DE88/00611**

(87) Internationale Veröffentlichungsnummer :
**WO 89/02825 06.04.90 Gazette 89/08**

(54) **VERFAHREN ZUM THERMISCHEN DRUCKEN AUF EINEM TRÄGER.**

(30) Priorität : **02.10.87 DE 3733804**

(43) Veröffentlichungstag der Anmeldung :
**27.12.90 Patentblatt 90/52**

(45) Bekanntmachung des Hinweises auf die
Patenterteilung :
**10.03.93 Patentblatt 93/10**

(84) Benannte Vertragsstaaten :
**AT BE CH DE FR GB IT LI NL SE**

(56) Entgegenhaltungen :
**EP-A- 0 035 746
US-A- 4 219 824
Patent Abstracts of Japan, vol. 6, no.
204(M-164)(1082), 15 October 1982; JP-
A-57109672**

(56) Entgegenhaltungen :
**Patent Abstracts of Japan, vol. 11, no.
128(M-583)(2575), 22 April 1987; JP-A-61270163
Patent Abstracts of Japan, vol. 6, no.
210(M-166)(1088), 22 October 1982; JP-
A-57117978**

(73) Patentinhaber : **SIEMENS
AKTIENGESELLSCHAFT
Wittelsbacherplatz 2
W-8000 München 2 (DE)**

(72) Erfinder : **DREES, Friedrich-Wilhelm
Dürerstrasse 46
W-1000 Berlin 45 (DE)**
Erfinder : **PEKRUHN, Wolfgang
Bingerstrasse 83
W-1000 Berlin 33 (DE)**
Erfinder : **SCHMIDT, Gerald
Löwenzahnweg 9A
W-1000 Berlin 47 (DE)**

EP 0 403 477 B1

**Beschreibung**

Bei einem derartigen, aus der EP-A-0 036 965 bekannten Verfahren wird ein wärmeempfindlicher Aufzeichnungsträger oder als Aufzeichnungsträger dienendes normales Papier mit einem anliegenden wärmeempfindlichen Farbträger dadurch bedruckt, daß auf einen Thermodruckkopf in einer Zeile angeordnete einzeln ansteuerbare Heizelemente in aufeinanderfolgenden Ansteuerzyklen selektiv aufgeheizt werden, währenddessen der Aufzeichnungsträger - gegebenenfalls unter Zwischenlage des Farbträgers an dem Thermodruckkopf quer zur Zeilenrichtung vorbeigeführt wird. Dazu werden in jedem Ansteuerzyklus die nach Maßgabe von Druckdaten in dem betreffenden Ansteuerzyklus jeweils zum Drucken bestimmten Heizelemente gleichzeitig über einzeln steuerbare Schalter für eine vorgegebene Ansteuerdauer parallel an eine allen Heizelementen gemeinsame Spannungsquelle geschaltet. Jedem angesteuerten Heizelement wird dadurch eine durch die Ansteuerdauer, den Widerstand des Heizelementes und die Ausgangsspannung der Spannungsquelle bestimmte Energie zugeführt, aufgrund derer das betreffende Heizelement auf eine zum Drucken erforderliche Temperatur aufgeheizt wird. Aufgrund der zeilenweisen Anordnung der Heizelemente werden in jedem Ansteuerzyklus ganze Druckzeilen (Mikrozeilen) gleichzeitig gedruckt, so daß eine sehr hohe Druckgeschwindigkeit erreicht wird, der allerdings eine relativ hohe von der Spannungsquelle bereitzustellende Leistung für den Fall der gleichzeitigen Ansteuerung aller Heizelemente des Thermodruckkopfes gegenübersteht.

Daher ist es beispielsweise aus der DE-A-33 02 388 bekannt, die zeilenweise angeordneten Heizelemente des Thermodruckkopfes gruppenweise nacheinander anzusteuern, wodurch sich die von der Spannungsquelle bereitzustellende Leistung um einen der Anzahl der Gruppen entsprechenden Faktor verringert; allerdings erhöht sich die zum Drucken einer Zeile erforderliche Zeit entsprechend. Es ist daher im Sinne der Erzielung hoher Druckgeschwindigkeiten erforderlich, die Anzahl der Gruppen möglichst gering zu halten, so daß immer noch eine relativ hohe Leistung durch die Spannungsquelle bereitgestellt werden muß.

Aus der JP-A-61-270163 (in Patent Abstacts of Japan, Vol. 11, No. 128 (M-583) (2575), 22. April 1987) ist ferner ein Thermodruckkopf bekannt, bei dem die Spannung der die Heizelemente versorgenden Spannungsquelle gemessen wird und in Abhängigkeit von der gemessenen Spannung die Ansteuerdauer für die Heizelemente so gesteuert wird, daß diese mit gleicher Intensität drucken. Fällt die Spannung aufgrund der Belastung durch die druckenden Heizelemente unter einen vorgegebenen Schwellenwert, so wird zusätzlich die Vorschubgeschwindigkeit für den zu bedruckenden Aufzeichnungsträger halbiert.

Der Erfindung liegt die Aufgabe zugrunde, bei einem Thermodruckverfahren die von der Spannungsquelle zur Versorgung der Heizelemente bereitgestellte Leistung optimal auszunutzen.

Zur Lösung dieser Aufgabe sind die im kennzeichnenden Teil des Anspruchs 1 aufgeführten Verfahrensschritte vorgesehen.

Der wesentliche Vorteil des erfindungsgemäßen Verfahrens liegt in der optimalen Ausnutzung der von der Spannungsquelle bereitgestellten Leistung, wobei einerseits die Spannungsquelle im Hinblick auf die von ihr bereitzustellende Leistung relativ klein dimensioniert ist - also ein Netzteil mit geringer Netzteilleistung Verwendung findet - und andererseits trotz der geringen Leistungsverfügbarkeit durch die Spannungsquelle hohe Druckgeschwindigkeiten erzielt werden. Dies wird dadurch erreicht, daß die Spannungsquelle zur Breitstellung einer Leistung dimensioniert ist, die lediglich für die Versorgung einer Teilzahl aller Heizelemente mit den für sie maximal zulässigen Einzelleistungen ausreicht. Liegt die in einem der Ansteuerzyklen jeweils zum Drucken bestimmte Anzahl von Heizelemente unter dieser Teilzahl, so werden alle anzusteuernden Heizelementen jeweils mit der für sie maximal zulässigen Einzelleistung bei sich hieraus ergebender minimaler Ansteuerdauer und maximaler Vorschubgeschwindigkeit für den Aufzeichnungsträger angesteuert. Liegt dagegen die in dem jeweiligen Ansteuerzyklus jeweils zum Drucken bestimmte Anzahl von Heizelementen über der angegebenen Teilzahl, so wird durch Steuerung der Ausgangsspannung der Spannungsquelle in Abhängigkeit von der Anzahl der aktuell anzusteuernden Heizelemente die von der Spannungsquelle abgegebene Leistung auf den Wert der maximal bereitzustellenden Leistung begrenzt; zugleich werden die Ansteuerdauer für die Heizelemente und die Vorschubgeschwindigkeit für den Aufzeichnungsträger in weitgehend umgekehrt proportionaler bzw. proportionaler Abhängigkeit zu dem auf jedes Heizelement entfallenden Anteil der von der Spannungsquelle bereitgestellten Leistung gesteuert, so daß die zum Drucken aufgewandte Energie pro Flächeinheit des Aufzeichnungsträgers weitgehend konstant bleibt. Dabei ist zu berücksichtigen, daß bei langsamen Druckgeschwindigkeiten eine größere Wärmemenge durch die Wärmeleitung des Thermodruckkopfes verloren geht, so daß die zugeführte Energie erhöht werden muß, ebenso wie bei hohen Druckgeschwindigkeiten, wenn die Ansteuerdauer für die druckenden Heizelemente kürzer wird als die Temperaturzeitkonstante des Thermodruckkopfes.

Die für die Dimensionierung der Spannungsquelle und für den Einsatzpunkt der variablen Steuerung der Ansteuerdauer für die Heizelemente und der Vorschubgeschwindigkeit für den Aufzeichnungsträger maßgebliche Teilzahl aller Heizelemente bestimmt sich aus den entgegengesetzten Forderungen nach einer möglichst geringen bereitzustellenden Leistung durch die Spannungsquelle und einer möglichst hohen Druckgeschwindigkeit. Vorteilhafterweise beträgt diese Teilzahl etwa 40% der Anzahl aller Heizelemente, weil dieser Wert dem maximalen Schwärzungsgrad einer Mikrozeile beim Drucken von Texten (nämlich der Basislinie der Buchstaben) entspricht, so daß Texte mit der maximalen Druckgeschwindigkeit gedruckt werden können; die variable Steuerung der Ansteuerdauer für die Heizelemente und der Vorschubgeschwindigkeit für den Aufzeichnungsträger kommt dann erst beim Drucken von Grafik mit einem Schwärzungsanteil von über 40% zum Tragen.

Der Zusammenhang zwischen der Ausgangsspannung der Spannungsquelle, der Ansteuerdauer für die Heizelemente und der Vorschubgeschwindigkeit für den Aufzeichnungsträger in Abhängigkeit von der Anzahl der jeweils gleichzeitig anzusteuernden Heizelemente kann als mathematischer Algorithmus Bestandteil eines Rechenprogramms sein, aufgrund dessen in jedem Ansteuerzyklus erneut die Werte für die Ausgangsspannung, Ansteuerdauer und Vorschubgeschwindigkeit als Sollwerte zur Steuerung dieser Größen berechnet werden. Um diese Sollwerte im Sinne der Erzielung einer möglichst hohen Druckgeschwindigkeit für jeden Ansteuerzyklus schnell ermitteln zu können, ist entsprechend einer vorteilhaften Weiterbildung des erfindungsgemäßen Verfahrens vorgesehen, daß in Abhängigkeit von der Anzahl der in jedem Ansteuerzyklus jeweils zum Drucken bestimmten Heizelemente einzelne Sollwerte zur Steuerung der Ausgangsspannung, der Ansteuerdauer und der Vorschubgeschwindigkeit aus einem Tabellenspeicher aufgerufen werden, in dem diese Werte für alle verschiedenen Anzahlen gleichzeitig ansteuerbarer Heizelemente einmalig ermittelt abgespeichert sind. Während nämlich, wie oben bereits erwähnt, der Zusammenhang zwischen der jedem-einzelnen Heizelement zugeführten Leistung, der Ansteuerdauer und der Vorschubgeschwindigkeit für den Aufzeichnungsträger nur in erster Näherung durch eine konstante Energieabgabe pro Flächeneinheit des Aufzeichnungsträgers bestimmt ist, läßt sich dieser Zusammenhang genauer nur mit einem relativ hohen Rechenaufwand oder experimentell ermitteln und daher einmalig ermittelt schneller aus dem Tabellenspeicher aufrufen, als in jedem Ansteuerzyklus neu berechnen. Im übrigen lassen sich die in dem Tabellenspeicher abgespeicherten Werte in vorgegebenen zeitlichen Abständen in Abhängigkeit von der über eine Temperaturmeßeinrichtung erfaßten Temperatur des Thermodruckkopfes und/ oder den Druckdaten vorangegangener Ansteuerzyklen an das jeweilige Temperaturniveau des Thermodruckkopfes anpassen.

Da bei dem erfindungsgemäßen Verfahren in jedem Ansteuerzyklus jeweils die Sollgrößen zur Steuerung der Ausgangsspannung der Spannungsquelle, der Ansteuerdauer für die Heizelemente und der Vorschubgeschwindigkeit für den Aufzeichnungsträger in Abhängigkeit von der Anzahl der aktuell zum Drucken bestimmten Heizelemente neu ermittelt werden, können insbesondere bei der Vorschubgeschwindigkeit für den Aufzeichnungsträger Änderungen der Sollwerte auftreten, die die maximal möglichen Werte für die Beschleunigung oder Abbremsung des Aufzeichnungsträgers überschreiten. In diesem Zusammenhang ist gemäß einer vorteilhaften Weiterbildung des erfindungsgemäßen Verfahren vorgesehen, daß in jedem Ansteuerzyklus der in dem jeweils vorangegangenen Ansteuerzyklus ermittelte Wert für die Vorschubgeschwindigkeit mit einem in dem aktuellen Ansteuerzyklus in Abhängigkeit von der Anzahl der zum Drucken bestimmten Heizelemente ermittelten Geschwindigkeitswert verglichen wird und daß bei Überschreitung eines vorgegebenen maximalen Beschleunigungswertes zur Erreichung dieses Geschwindigkeitswertes ein neuer, sich aus dem vorgegebenen maximalen Beschleunigungswert ergebender Geschwindigkeitswert für die Vorschubgeschwindigkeit festgelegt ist, der zusammen mit den ihm in dem Tabellenspeicher jeweils zugeordneten Werten für die Ausgangsspannung und die Ansteuerdauer jeweils zur Steuerung der Vorschubgeschwindigkeit, Ausgangsspannung und Ansteuerdauer herangezogen wird.

Für den Fall, daß aufgrund der Druckdaten ein plötzlicher Übergang von einer großen zu einer geringen Anzahl zum Drucken bestimmter Heizelemente stattfindet, wird daher die Vorschubgeschwindigkeit mit der maximal vorgegebenen Beschleunigung vergrößert, so daß zeitweise aufgrund des langsameren Anstiegs der Vorschubgeschwindigkeit im Vergleich zu dem Anstieg der Anzahl gleichzeitig anzusteuernder Heizelemente aus der Spannungsquelle eine Leistung bezogen wird, die geringer als die von ihr bereitzustellende Leistung ist.

Umgekehrt würde aber bei einem plötzlichen Übergang von einer geringen zu einer großen Anzahl zum Drucken bestimmter Heizelemente aufgrund einer begrenzten Verzögerung der Vorschubgeschwindigkeit die Anzahl der zum Drucken bestimmten Heizelemente schneller zunehmen, als die Vorschubgeschwindigkeit verringert werden kann, so daß der von den Heizelementen benötigte Leistungsbedarf zur Gewährleistung einer nahezu gleichbleibenden Energieabgabe pro Flächeneinheit des Aufzeichnungsträgers die von der Spannungsquelle bereitzustellende Leistung überschreiten würde. In diesem Zusammenhang wird eine Überlastung der Spannungsquelle in vorteilhafter Weise dadurch verhindert, daß in jedem Ansteuerzyklus aufgrund von für eine vorgegebene Anzahl von im voraus erfaßten und die jeweils zum Drucken bestimmten Heizelemente bezeichnenden Druckdaten die zugehörigen Geschwindigkeitswerte für die Vorschubgeschwindigkeit des Aufzeichnungsträgers aus dem Tabellenspeicher aufgerufen werden, daß diese im voraus ermittelten Geschwindigkeitswerte jeweils mit dem Geschwindigkeitswert verglichen werden, der für den in Bezug auf den jeweils aktuellen Ansteuerzyklus vorangegangenen Ansteuerzyklus ermittelt wurde und daß bei Überschreitung eines vorangegebenen maximalen Verzögerungswertes zur Erreichung des kleinsten der im voraus ermittelten Geschwindigkeitswerte für den jeweils aktuellen Ansteuerzyklus ein sich aus dem maximalen Verzögerungswert ergebender Wert für die Vorschubgeschwindigkeit festgelegt wird, der zusammen mit den ihm in den Tabellenspeicher jeweils zugeordneten Werten für die Ausgangsspannung und die Ansteuerdauer jeweils zur Steuerung der Vorschubgeschwindigkeit, Ausgangsspannung und Ansteuerdauer herangezogen wird.

Dabei ist die vorgegebene Anzahl vorausschauend zu berücksichtigender Ansteuerzyklen im Rahmen der Erfindung derart bemessen, daß die Gesamtdauer dieser Ansteuerzyklen mit der zum Abbremsen des Vorschubs des Aufzeichnungsträgers von einer maximal möglichen Vorschubgeschwindigkeit bis zum Stillstand erforderlichen Zeit übereinstimmt. Auf diese Weise wird es ermöglicht, im Extremfall den Aufzeichnungsträger beim Nichtdrucken mit maximaler Vorschubgeschwindigkeit zu bewegen und im voraus rechtzeitig mit der maximalen Bremsverzögerung auf eine minimale Vorschubgeschwindigkeit beispielsweise zum Drucken einer durchgehend schwarzen Linie abzubremsen.

Die vorstehend angegebene Steuerung der Ausgangsspannung, Ansteuerdauer und Vorschubgeschwindigkeit in Abhängigkeit von der Anzahl der zum Drucken bestimmten Heizelemente erfolgt während des Druckens einer Seite für jede Mikrozeile der Seite, so daß sowohl vom Umfang als auch von der Geschwindigkeit her ein entsprechend großer Rechenaufwand zur Ermittlung der Steuerungswerte erforderlich ist. Entsprechend einer vorteilhaften Verfahrensvariante wird der Rechenaufwand durch folgende Verfahrensschritte reduziert:
Vor dem Drucken einer Seite werden die Anzahlen der zum Drucken bestimmten Heizelemente für jede einzelne Mikrozeile der Seite in eine Tabelle gelesen; innerhalb der Tabelle wird die Seite in Blöcke mit jeweils einer konstanten Anzahl von Mikrozeilen aufgeteilt, wobei jeder Block mindestens soviel Mikrozeilen enthält, daß innerhalb der Blockgröße eine maximale Änderung der Vorschubgeschwindigkeit des Aufzeichnungsträgers möglich ist;
für jeden Block wird in Abhängigkeit von der größten vorkommenden Anzahl der zum Drucken einer Mikrozeile bestimmten Heizelemente ein Wert für die Ausgangsspannung, die Ansteuerdauer und die Vorschubgeschwindigkeit ermittelt.

Um zu verhindern, daß bei einer plötzlichen Zunahme der zum Drucken einer Mikrozeile bestimmten Heizelemente die Vorschubgeschwindigkeit für den Aufzeichnungsträger nicht so schnell verringert werden kann, daß der von den Heizelementen benötigte Leistungsbedarf die Spannungsquelle überlasten würde, sind vorzugsweise folgende weitere Verfahrensschritte vorgesehen:
die blockweise ermittelten größten vorkommenden Anzahlen der zum Drucken einer Mikrozeile bestimmten Heizelemente werden zwischen aufeinanderfolgenden Blöcken miteinander verglichen;
erhöht sich diese größte ermittelte Anzahl von einem Block auf den nächsten Block, so wird die Vorschubgeschwindigkeit innerhalb des vorhergehenden Blocks bis auf den Wert für den nächsten Block verringert;
ist dabei die Strecke (Regelbereich), die zur Änderung der Vorschubgeschwindigkeit erforderlich ist, größer als der Abstand zwischen dem Anfang des neuen Blockes und dem Auftreten der größten Anzahl gleichzeitig anzusteuernder Heizelemente, so wird die Vorschubgeschwindigkeit bereits in dem vorangehenden Block auf den Wert für den neuen Block verringert;
verringert sich die größte ermittelte Anzahl von druckenden Heizelementen von einem Block auf den nächsten Block, so wird die Vorschubgeschwindigkeit innerhalb des neuen Blocks auf den für diesen Block ermittelten Wert erhöht;
wird dabei der Anfang des neuen Blocks von dem Regelbereich überschritten, so bleibt die Vorschubgeschwindigkeit in dem neuen Block dieselbe wie in dem vorangehenden Block.

Wie eingangs bereits erläutert, läßt sich eine zusätzliche Reduzierung der von der Spannungsquelle bereitzustellenden Leistung dadurch erreichen, daß die zeilenweise angeordneten Heizelemente des Thermodruckkopfes gruppenweise nacheinander angesteuert werden, wodurch sich die von der Spannungsquelle bereitzustellende Leistung um einen der Anzahl der Gruppen entsprechenden Faktor verringert. In diesem Zusammenhang ist im Rahmen der Erfindung weiter vorgesehen, daß die Heizelemente des Thermodruckkopfes zu Gruppen zusammengefaßt werden und daß zum Drucken jeder Mikrozeile von den jeweils anzusteuernden Heizelementen diejenigen innerhalb einer Gruppe gleichzeitig und die Heizelemente unterschiedlicher Gruppen gruppenweise nacheinander angesteuert werden, wobei die Ansteuerdauer für die Heizelemente und die Vorschußgeschwindigkeit für den Auzeichnungsträger in Abhängigkeit von der jeweils größten Anzahl zum Drucken bestimmter Heizelemente einer der Gruppen gesteuert werden.

Zur Erläuterung der Erfindung wird im folgenden auf die Figuren der Zeichnung Bezug genommen; im einzelnen zeigen

Figur 1 ein Ausführungsbeispiel einer Thermodruckvorrichtung zur Durchführung des erfindungsgemäßen Verfahrens,

Figur 2 in einem Diagramm die Zusammenhänge zwischen der Anzahl der jeweils zum Drucken bestimmten Heizelemente, der Ausgangsspannung der Spannungsquelle, der auf die Heizelemente jeweils entfallenden Leistung, ihrer Ansteuerdauer und der Vorschubgeschwindigkeit für den Aufzeichnungsträger entsprechend dem erfindungsgemäßen Verfahren,

Figur 3 ein Struktogramm zur Verdeutlichung des erfindungsgemäßen Verfahrens,

Figur 4 ein Diagramm mit dem zeitlichen Verlauf der Vorschubgeschwindigkeit für den Aufzeichungsträger,

Figur 5 die zeitlichen Verläufe der Ausgangsspannung der Spannungsquelle, der Ansteuerdauer der Heizelemente und der Vorschubgeschwindigkeit des Aufzeichnungsträgers in Abhängigkeit von der Anzahl jeweils gleichzeitig druckender Heizelemente und

Figur 6 ein Diagramm, in dem die Anzahl der gleichzeitig druckenden Heizelemente und die daraus bestimmte Vorschubgeschwindigkeit über der Anzahl der Zeilen einer zu druckenden Seite aufgetragen sind.

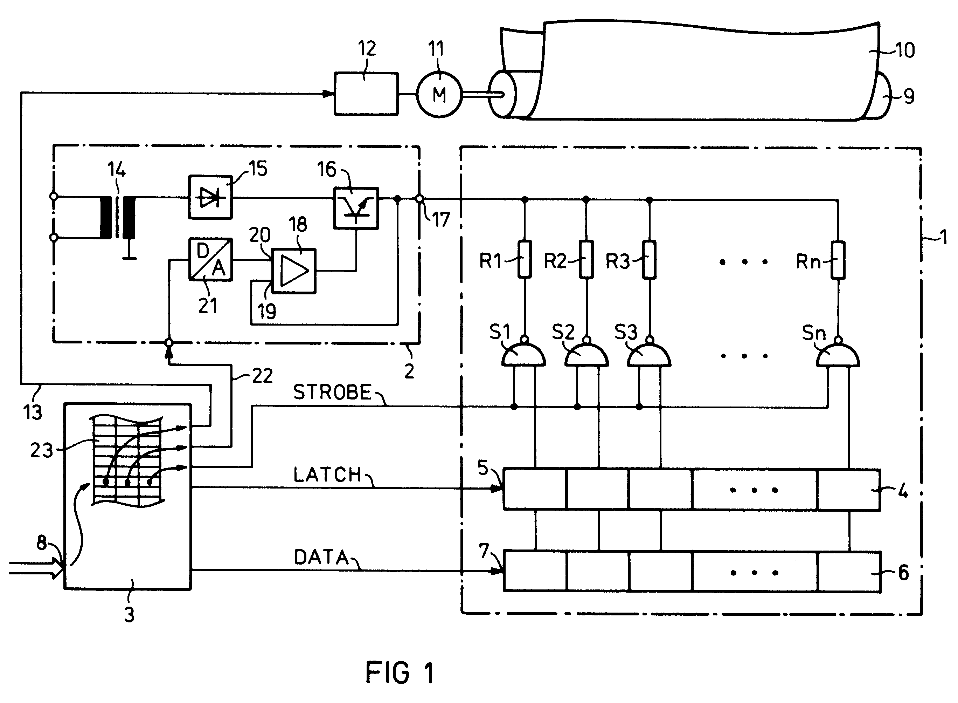

Figur 1 zeigt in schematischer Darstellung den schaltungstechnischen Aufbau eines Ausführungsbeispiels einer Thermodruckvorrichtung zur Durchführung des erfindungsgemäßen Verfahrens. Auf einem hier lediglich durch eine strichpunktierte Umrandung angedeuteten Thermodruckkopf 1 sind eine Vielzahl einzelner Heizelemente R1 ... Rn entlang einer Zeile dicht nebeneinanderliegend angeordnet. Jedes einzelne Heizelement R1 ... Rn ist in Reihe mit einem ihm jeweils zugeordneten steuerbaren Schalter S1 ... Sn an einer für alle Heizelemente R1 ... Rn gemeinsamen Spannungsquelle 2 angeschlossen. Die steuerbaren Schalter S1 ... Sn bestehen jeweils aus NAND-Gliedern, die über jeweils einen ersten Eingang gemeinsam mit einer ausgangsseitigen Ansteuertaktsignalleitung STROBE einer Steuereinrichtung 3 verbunden sind; darüberhinaus sind die NAND-Glieder S1 ... Sn über jeweils einen zweiten Eingang an ihnen zugeordneten Ausgängen einer Halteschaltung 4 angeschlossen, die eine der Anzahl der Heizelemente R1 ... Rn bzw. der steuerbaren Schalter S1 ... Sn entsprechende Zahl von Speicherplätzen aufweist. Die Halteschaltung 4 ist über einen Steuereingang 5 mit einer ausgangsseitigen Datenübernahmesignalleitung LATCH der Steuereinrichtung 3 verbunden. Eingangsseitig ist die Halteschaltung 4 mit Paralleldatenausgängen eines Serien/Parallel-Schieberegisters 6 verbunden, das eine gleiche Anzahl von Speicherplätzen wie die Halteschaltung 4 aufweist. An ihrem seriellen Dateneingang 7 ist das Serien/Parallel-Schieberegister 6 an einer ausgangsseitigen Datensignalleitung DATA der Steuereinrichtung 3 angeschlossen. Die Steuereinrichtung 3 weist einen Dateneingang 8 zur Übernahme von Druckdaten auf, entsprechend denen die Heizelemente R1 ... Rn einzeln aufgeheizt werden sollen, um eine Informationsaufzeichnung der Druckdaten auf einem an den Heizelementen R1 ... Rn anliegenden und mittels einer Druckwalze 9 quer zur Zeilenrichtung an ihnen vorbeigeführten wärmeempfindlichen Aufzeichnungsträger 10 zu erreichen. Die Druckwalze 9 ist antriebsseitig mit einem Schrittmotor 11 verbunden, der an einer Schrittmotorsteuereinrichtung 12 angeschlossen ist. Die Schrittmotorsteuereinrichtung 12 ist steuereingangsseitig mit einer ausgangsseitigen Vorschubgeschwindigkeitssteuerleitung 13 der Steuereinrichtung 3 verbunden.

Die zur Stromversorgung der Heizelemente R1 ... Rn vorgesehene Spannungsquelle 2 ist als Netzteil ausgebildet, innerhalb dessen einem aus einem hier nicht gezeigten Wechselspannungsnetz gespeisten Netztransformator 10 ein Gleichrichter 15 nachgeordnet und diesem ein Längsspannungsregler 16 nachgeschaltet ist. Der Ausgang des Längsspannungsreglers 16 bildet den mit den Heizelementen R1 ... Rn verbundenen Ausgangsanschluß 17 der Spannungsquelle 2. Der Längsspannungsregler 16 ist steuereingangsseitig an dem Ausgang einer Vergleichereinrichtung 18 angeschlossen, die über einen ersten Eingang 19 mit dem Ausgangsanschluß 17 der Spannungsquelle 2 verbunden ist und über einen zweiten Eingang 20 an dem Ausgang eines Digital/Analog-Umsetzers 21 angeschlossen ist; der Digital/Analog-Umsetzer 21 ist eingangsseitig mit einer ausgangsseitigen Spannungssteuerleitung 22 der Steuereinrichtung 3 verbunden.

In jedem Ansteuerzyklus werden die Druckdaten, die die in dem betreffenden Ansteuerzyklus jeweils zum Drucken bestimmten Heizelemente R1...Rn bezeichnen, über den Dateneingang 8 der Steuereinrichtung 3 zugeführt und von dieser als serielle Daten über die Datensignalleitung DATA in das Serien/Parallel-Schieberegister 6 eingelesen, an dessen Parallelausgängen sie in Form von parallelen Daten anliegen. Durch ein von der Steuereinrichtung 3 auf der Datenübernahmesignalleitung LATCH erzeugtes Datenübernahmesignal werden die parallelen Daten aus den Serien/Parallel-Schieberegister 6 in die Halteschaltung 4 umgeladen, so daß danach das Schieberegister 6 mit neuen Daten für den folgenden Ansteuerzyklus geladen werden kann. Mit einem von der Steuereinrichtung 3 auf der Ansteuertaktsignalleitung STROBE erzeugten Ansteuertaktsignal werden die einzelnen Heizelemente R1...Rn entsprechend den in der Halteschaltung 4 zwischengespeicherten Daten für eine vorgegebene Ansteuerdauer mit einem Strom aus der Spannungsquelle 2 beaufschlagt.

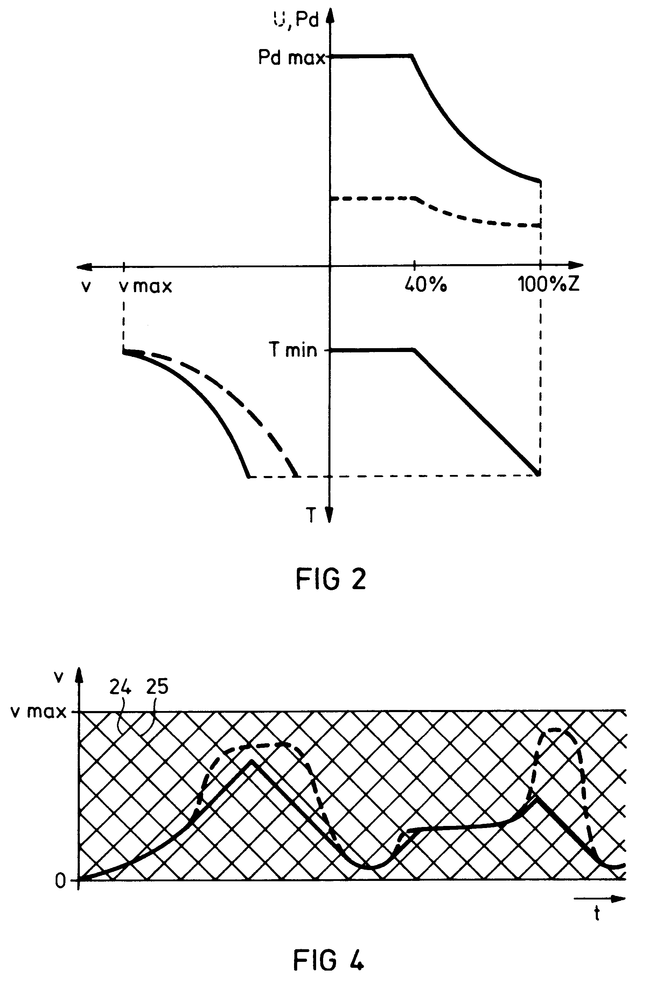

Im folgenden wird das erfindungsgemäße Verfahren anhand des in Fig. 1 gezeigten Ausführungsbeispiels einer Thermodruckvorrichtung und des Diagramms in Fig. 2 erläutert. Wie Fig. 1 zeigt, enthält die Steuereinrichtung 3 einen hier nur angedeuteten Tabellenspeicher 23. In diesem Tabellenspeicher 23 sind Sollwerte zur Steuerung der Ausgangsspannung der Spannungsquelle 2, der Ansteuerdauer für die Heizelemente R1 ... Rn und der Vorschubgeschwindigkeit für den Aufzeichnungsträger 10 jeweils als Wertetripel in Abhängigkeit von verschiedenen Anzahlen jeweils gleichzeitig anzusteuernder Heizelemente R1 ... Rn einmalig ermittelt abgespeichert. In jedem Ansteuerzyklus wird durch einen später noch näher zu erläuternden Programmablauf in Abhängigkeit von der Anzahl der aktuell zum Drucken bestimmten Heizelemente R1 ... Rn aus dem Tabellenspeicher 23 die zugehörigen Sollwerte zur Steuerung der Ausgangsspannung der Spannungsquelle 2, der Ansteuerdauer für die Heizelemente R1 ... Rn und der Vorschubgeschwindigkeit für den Aufzeichnungsträger 10 aufgerufen und jeweils über die Spannungssteuerleitung 22 an die Spannungsquelle 2, über die Ansteuertaktsignalleitung STROBE an die steuerbaren Schalter S1 ... Sn und über die Vorschubgeschwindigkeitssteuerleitung 13 an die Schrittmotorsteuereinrichtung 12 zur Steuerung der betreffenden Größen abgegeben.

Fig. 2 zeigt in einem Diagramm den Zusammenhang zwischen der Anzahl Z der gleichzeitig zum Drucken bestimmten Heizelemente R1 ... Rn, der Ausgangsspannung U der Spannungsquelle 2, der auf jedes der gleichzeitig angesteuerten Heizelemente R1 ... Rn jeweils entfallenden Einzelleistung Pd, der Ansteuerdauer T für die Heizelemente R1 ... Rn und der Vorschubgeschwindigkeit v für den Aufzeichnungsträger 10 entsprechend dem erfindungsgemäßen Verfahren. Dabei ist die Spannungsquelle 2 so dimensioniert, daß die von ihr maximal bereitzustellende Leistung - also die Leistung, die ihr ohne Schädigung im Dauerbetrieb entnommen werden kann - lediglich zur Versorgung einer Teilzahl aller Heizelemente R1 ... Rn mit den jeweils für diese maximal zulässigen Einzelleistungen Pdmax ausreicht. Oer Aufbau der Spannungsquelle (Netzteil) 2 ist daher relativ kompakt und kostengünstig ausführbar. Entsprechend dem in Fig. 2 gezeigten Diagramm ist die von der Spannungsquelle 2 bereitzustellende Leistung zur gleichzeitigen Versorgung von 40 % aller Heizelemente R1 ... Rn mit der jeweils maximalen Einzelleistung Pdmax je Heizelement bemessen. Solange in jedem Ansteuerzyklus jeweils weniger als 40 % der Heizelemente R1 ... Rn zum Drucken bestimmt sind, werden diese jeweils mit der maximal zulässigen Einzelleistung Pdmax während einer minimalen Ansteuerdauer Tmin und einer maximalen Vorschubgeschwindigkeit v max für den Aufzeichnungsträger 10 beaufschlagt. Übersteigt dagegen die Anzahl der gleichzeitig zum Drucken bestimmten Heizelemente R1 ... Rn die vorgegebene Teilzahl von 40 %, so wird die Ausgangsspannung U der Spannungsquelle 2 so gesteuert, daß die Spannungsquelle 2 nur noch die von ihr maximal bereitzustellende Leistung abgibt. Der Sollwertverlauf für die Ausgangsspannung U bestimmt sich dann nach der Formel

$$U = \sqrt{(Pverf / Z) \cdot Rd} \, ,$$

wobei Pverf die von der Spannungsquelle 2 maximal bereitgestellte Leistung ist und Rd den elektrischen Widerstand jeweils eines der Heizelemente R1 ... Rn bezeichnet. Dabei entfällt auf jedes einzelne Heizelement R1 ... Rn jeweils ein Leistungsanteil Pd mit

$$Pd = Pverf/Z.$$

Da der auf jedes einzelne Heizelement R1 ... Rn entfallende Leistungsanteil Pd umgekehrt proportional zur Anzahl Z der gleichzeitig zum Drucken bestimmten Heizelemente R1 ... Rn ist, wird die Ansteuerdauer T für die Heizelemente R1 ... Rn und die Vorschubgeschwindigkeit v für den Aufzeichnungsträger 10 jeweils in umgekehrt proportionaler bzw. proportionaler Abhängigkeit zu dem auf jedes der Heizelemente R1 ... Rn jeweils entfallenden Leistungsanteil Pd gesteuert, so daß die zum Drucken aufgewandte Energie pro Flächeneinheit des Aufzeichnungsträger 10 weitgehend konstant bleibt. Bei zusätzlicher Berücksichtigung des Wärmeverlustes bei langsamen Druckgeschwindigkeiten und der Thermodynamik des Thermodruckkopfes 1 bei hohen Druckgeschwindigkeiten ergibt sich der gestrichelt dargestellte Verlauf der Vorschubgeschwindigkeit v für den Aufzeichnungsträger 10 in bezug auf die Ansteuerdauer T.

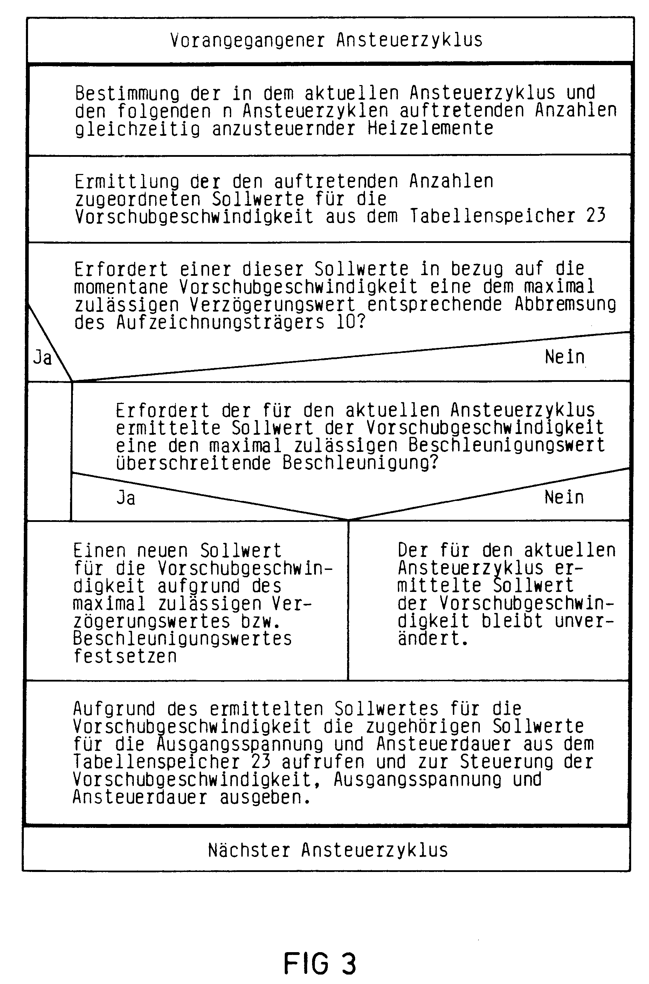

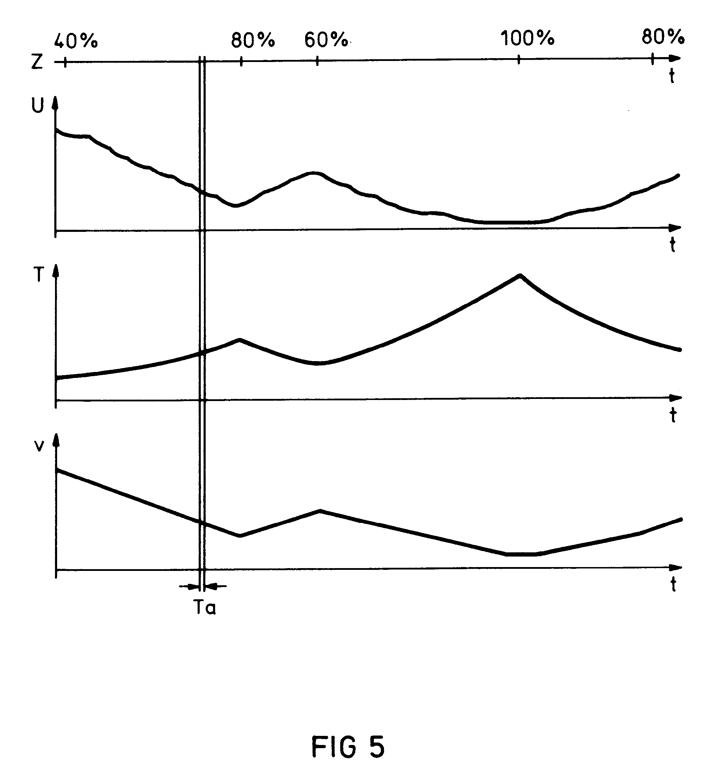

Das Diagramm in Fig. 2 zeigt jedoch nur den statischen Zusammenhang zwischen der Anzahl Z gleichzeitig anzusteuernder Heizelemente R1 ... Rn, der Ansteuerdauer T und der Vorschubgeschwindigkeit v. Da sich die Sollwerte für diese Größen in jedem neuen Ansteuerzyklus ändern können, ist es erforderlich, die maximal mögliche Änderung dieser Größen je Zeiteinheit zu berücksichtigen. Insbesondere sind im Zusammenhang mit der Steuerung der Vorschubgeschwindigkeit v für den Aufzeichnungsträger 10 keine beliebig schnellen Beschleunigungen oder Abbremsungen möglich, weswegen bei dem erfindungsgemäßen Verfahren die maximal möglichen Werte für die Beschleunigung und Abbremsung des Aufzeichnungsträgers 10 zusätzlich Berücksichtigung finden. Hierzu wird im folgenden anhand des in Fig. 3 gezeigten Struktodiagramms das erfindungsgemäße Verfahren als Programmablauf innerhalb der Steuereinrichtung 3 (Fig. 1) erläutert. Zu Beginn eines jeden neuen Ansteuerzyklus wird zunächst für diesen und eine vorgegebene Anzahl von auf den aktuellen Ansteuerzyklus folgenden späteren Ansteuerzyklen die sich aus den für diese Ansteuerzyklen vorgesehenen Anzahlen gleichzeitig druckende Heizelemente R1 ... Rn ergebenden Sollwerte für die Vorschubgeschwindigkeit v aus dem Tabellenspeicher 23 ermittelt. Diese Geschwindigkeitswerte (Sollwerte) werden mit dem derzeit aktuellen, in dem letzten Ansteuerzyklus für die Vorschubgeschwindigkeit v ermittelten Wert verglichen und daraufhin überprüft, ob zum Erreichen eines der im voraus ermittelten Geschwindigkeitswerte eine Bremsverzögerung der Vorschubgeschwindigkeit v erforderlich ist, die dem maximal möglichen Verzögerungswert entspricht. Ist dies der Fall, so wird für den aktuellen Ansteuerzyklus ein sich aus dem maximalen Verzögerungswert ergebender Sollwert für die Vorschubgeschwindigkeit v festgesetzt; dieser für die Vorschubgeschwindigkeit v festgesetzte Sollwert wird zusammen mit den ihm in dem Tabellenspeicher 23 jeweils zugeordneten Werten für die Ausgangsspannung U und die Ansteuerdauer T jeweils zur Steuerung der Vorschubgeschwindigkeit v, Ausgangsspannung U und Ansteuerdauer T herangezogen. In dem anderen Fall werden in Abhängigkeit von der Anzahl Z der in dem aktuellen Ansteuerzyklus jeweils zum Drucken bestimmten Heizelemente R1 ... Rn die zugehörigen Sollwerte für die Ausgangsspannung U, die Ansteuerdauer T und die Vorschubgeschwindigkeit v aus der Speichertabelle 23 aufgerufen und der Sollwert für die Vorschubgeschwindigkeit mit dem in dem jeweils vorangegangenen Ansteuerzyklus ermittelten Wert für die Vorschubgeschwindigkeit v verglichen. Ergibt sich dabei eine Überschreitung des vorgegebenen maximalen Beschleunigungswertes zur Erreichung des neu ermittelten Geschwindigkeitswertes, so wird für die Vorschubgeschwindigkeit v ein neuer Sollwert festgesetzt, der sich aus dem maximalen Beschleunigungswert ergibt; dieser festgesetzte Sollwert für die Vorschubgeschwindigkeit v wird zusammen mit den ihm in dem Tabellenspeicher 23 jeweils zugeordneten Werten für die Ausgangsspannung U und die Ansteuerdauer T jeweils zur Steuerung der Vorschubgeschwindigkeit v, Ausgangsspannung U und Ansteuerdauer T herangezogen. Anderenfalls werden zur Steuerung dieser Größen die ursprünglich aus dem Tabellenspeicher 23 aufgerufenen Sollwerte für die Spannung U, Ansteuerzeit T und Vorschubgeschwindigkeit v herangezogen. Auf diese Weise werden Änderungen der Vorschubgeschwindigkeit v für den Aufzeichnungsträger 10 auf die maximal zulässigen Werte für die Beschleunigung bzw. Abbremsung des Aufzeichnungsträgers 10 begrenzt. Fig. 4 zeigt dies beispielhaft für einen durch eine ausgezogene Linie dargestellten Verlauf der Vorschubgeschwindigkeit v für den Aufzeichnungsträger 10 im Vergleich zu einem strichliert dargestellten Verlauf der Vorschubgeschwindigkeit v, der sich allein unter der Berücksichtigung des in Fig. 2 dargestellten Zusammenhangs der einzelnen Größen ohne Berücksichtigung der maximal möglichen Beschleunigung und Abbremsung für den Aufzeichnungsträger 10 ergeben würde. Mit den Bezugszeichen 24 und 25 sind Kurvenscharen für die maximal mögliche Beschleunigung bzw. die maximal mögliche Abbremsung für den Aufzeichnungsträger 10 bezeichnet.

In Fig. 5 ist beispielhaft der zeitliche Verlauf der Ausgangsspannung U der Spannungsquelle 2, die Ansteuerdauer T für die Heizelemente R1 bis Rn und die Vorschubgeschwindigkeit v für den Aufzeichnungsträger 10 in Abhängigkeit von der Anzahl Z jeweils gleichzeitig in einem Ansteuerzyklus Ta zum Drucken bestimmter Heizelemente R1 ... Rn.

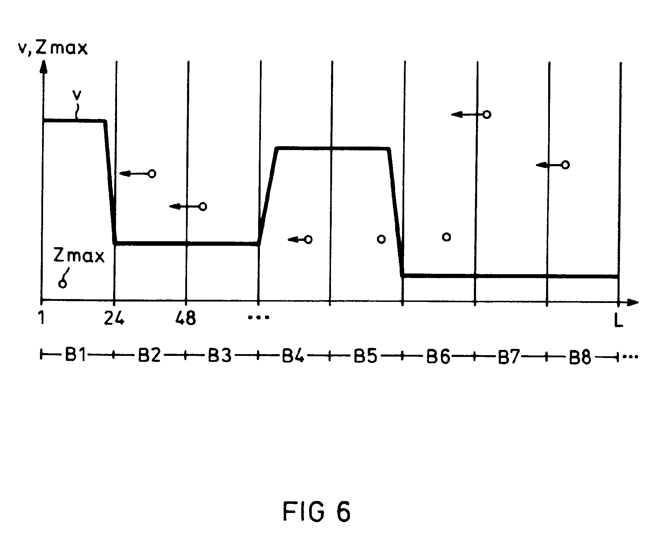

Figur 6 zeigt zur Erläuterung einr weiteren Verfahrensvariante ein Diagramm, in dem über der Anzahl von Mikrozeilen L einer zu druckenden Seite eines Aufzeichnungsträgers 10 die blockweise auftretenden Maximalwerte Zmax für die Anzahl gleichzeitig druckender Heizelemente R1 ... Rn und die daraus bestimmte Vorschubgeschwindigkeit v für den Aufzeichnungsträger 10 aufgetragen sind.

Vor dem Drucken der Seite werden über die Druckdaten, die der Steuereinrichtung 3 (Fig. 1) über den Dateneingang 8 zugeführt werden, die Anzahlen Z der zum Drucken bestimmten Heizelemente R1 ... Rn für jede einzelne zu druckende Mikrozeile L in eine Tabelle (Speicher) der Steuereinrichtung 3 eingelesen. Jede Mikrozeile L ergibt sich aus der linearen Aneinanderreihung der Heizelemente R1 ... Rn, wobei eine zu druckende DIN A4-Seite bei einer Auflösung von beispielsweise 400 Punkten/Zoll (dpi) etwa 3 500 Mikrozeilen L umfaßt. Innerhalb der Tabelle wird die zu druckende Seite bezüglich der Druckdaten in gleiche Blöcke B1 ... B8 unterteilt, von denen jeder Block B1 ... B8 mindestens soviel Mikrozeilen L enthält, daß innerhalb eines Vorschubes für den Aufzeichnungsträger 10 zwischen den Werten für die maximale und minimale Vorschubgeschwindigkeit v möglich ist. Für jeden der Blöcke B1 ... B8 soll jeweils ein Wert für die Vorschubgeschwindigkeit v des Aufzeichnungsträgers 10, für die Ansteuerung T der Heizelemente R1 ... Rn und für die Spannung U der Spannungsquelle 2 ermittelt werden, die zu der im Block B1 ... B8 auftretenden maximalen Anzahl Zmax gleichzeitig anzusteuernder Heizelemente R1 ... Rn korreliert und für den Block konstant ist. Diese maximale Anzahl Zmax gleichzeitig anzusteuernder Heizelemente R1 ... Rn entspricht dem Schwärzungsgrad der jeweils schwärzesten zu druckenden Mikrozeile L eines jeden Blocks B1 ... B8. Tritt zwischen zwei aufeinanderfolgenden Blöcken B1 ... B8 eine Änderung des maximalen Schwärzungsgrades, d. h. der maximalen Anzahl Zmax gleichzeitig druckender Heizelemente R1 ... Rn auf, aus der sich in Abhängigkeit von dem Brems- und Beschleunigungsvermögen des Schrittmotors 11 (Fig.1) ein bestimmter Regelbereich RB (der Regelbereich bezeichnet - in Mikrozeile L ausgedrückt - die Strecke, die benötigt wird, um die Vorschubgeschwindigkeit v von einem Wert auf einen anderen Wert zu ändern) ergibt, so muß die Änderung bzw. Steuerung der Vorschubgeschwindigkeit in einem der Blöcke B1 ... B8 stattfinden; dabei darf während der Geschwindigkeitsänderung keine Überlastung der Spannungsquelle 2 aufgrund eines erhöhten Leistungsbedarfs der Heizelemente R1 ... Rn stattfinden. Dazu wird die Vorschubgeschwindigkeit v wie folgt geregelt:

Erhöht sich der maximale Schwärzungsgrad (entspricht Zmax) von einem Block auf den nächsten Block, z. B. von B1 auf B2, so wird die Vorschubgeschwindigkeit v innerhalb des vorangehenden Blocks B1 bis auf den für den nächsten Block B2 ermittelten Wert verringert.

Verringert sich dagegen der Schwärzungsgrad (entspricht Zmax) zwischen zwei Blöcken, z. B. von B3 auf B4, so wird die Vorschubgeschwindigkeit v in dem neuen Block B4 bis auf den für diesen Block B4 ermittelten Wert erhöht.

Wird der Anfang eines Blockes, z. B. B3 bei abnehmenden Schwärzungsgrad vom Auftreten des maximalen Schwärzungsgrades Zmax an gerechnet, durch den Regelbereich RB überschritten, dann bleibt die Vorschubgeschwindigkeit v dieselbe wie in dem vorangehenden Block B2. Nimmt dagegen bei blocküberschreitenden Regelbereich RB die Schwärzung zu (z. B. von B6 auf B7), dann wird auch in dem vorhergehenden Block B6 mit der zu dem höheren Schwärzungsgrad des Blocks B7 korrelierten Vorschubgeschwindigkeit v gedruckt.

Zur Erzielung einer optimalen Druckgeschwindigkeit ist die Wahl der Blöckgröße, d. h. die Anzahl der Geschwindigkeitsänderungen auf der Seite, maßgeblich. Dazu ist es notwendig, die Blockgröße den Schwärzungsschwankung des Druckbildes in geeigneter Weise anzupassen. Ist die Blockgröße gleich dem maximalen Regelbereich RB des Schrittmotors 11, dann ist die Wahrscheinlichkeit, daß der Regelbereich RB nicht innerhalb des Blockes B1 ... B8 liegt, sehr groß und die Anzahl der Geschwindigkeitsänderungen wird abnehmen. Eine erste Optimierung ist bei Texten möglich, wo Häufungspunkte hinsichtlich der Schwärzung in der Schriftgrundlinie und dem Bereich der Minuskel- bzw. Versalhöhe auftreten, woraus sich eine entsprechende Blockgröße ableiten läßt, da diese Größen bekannt sind. Bei Grafik ist eine Aussage in der Form nicht möglich, da keine grundsätzlichen Regelmäßigkeiten zu erwarten sind. Hier sind verteilungserrechnende Algorithmen anzuwenden, um geschwindigkeitsoptimierte Ergebnisse zu erzielen. Analysen des Schwärzungsgrades von Grafiken mit Hilfe der Fourier-Transformation ergaben Blockgrößen, woraus sich eine maximale, über die Seite gemittelte, Druckgeschwindigkeit erzielen ließ.

**Patentansprüche**

1. Verfahren zum thermischen Drucken auf einem Aufzeichnungsträger (10) mittels eines Thermodruckkopfes (1), der eine Vielzahl von entlang einer sich über die Breite des zu bedruckenden Aufzeichnungsträgers (10) erstreckenden Zeile angeordneten, einzeln ansteuerbaren Heizelementen (R1 ... Rn) aufweist, von denen in aufeinanderfolgenden Ansteuerzyklen jedesmal die zum Drucken jeweils einer Mikrozeile bestimmten Heizelemente (R1 ... Rn) während einer vorgegebenen Ansteuerdauer (T) parallel an eine allen Heizelementen (R1 ... Rn) gemeinsame Spannungsquelle (2) geschaltet werden, währenddessen der Aufzeichnungsträger (10) quer zur Zeilenrichtung an dem Thermodruckkopf (1) vorbeigeführt wird,

   **dadurch gekennzeichnet,** daß ausgehend von einer Dimensionierung der Spannungsquelle (2) auf die Bereitstellung von maximal für die Versorgung lediglich einer Teilzahl aller Heizelemente (R1 ... Rn) mit jeweils einer für jedes Heizelement (R1 ... Rn) maximal zulässigen Einzelleistung (Pdmax) ausreichenden Leistung die Ausgangsspannung (U) der Spannungsquelle (2) in Abhängigkeit von der Anzahl (Z) der in jedem Ansteuerzyklus jeweils zum Drucken bestimmten Heizelemente (R1 ... Rn) derart gesteuert wird, daß bei einer die Teilzahl unterschreitenden Anzahl (Z) gleichzeitig anzusteuernder Heizelemente (R1 ... Rn) die Ausgangsspannung (U) der Spannungsquelle (2) auf einen konstanten Spannungswert geregelt wird, bei dem jedes angesteuerte Heizelement (R1 ... Rn) jeweils mit der maximal zulässigen Einzelleistung (Pdmax) versorgt wird und daß bei einer die Teilzahl überschreitenden Anzahl (Z) gleichzeitig anzusteuernder Heizelement (R1 ... Rn) die von der Spannungsquelle (2) maximal bereitzustellende Leistung abgegeben wird, wobei die Ansteuerdauer (T) für die Heizelemente (R1 ... Rn) und die Vorschubgeschwindigkeit (v) für den Aufzeichnungsträger (10) jeweils in nahezu umgekehrt proportionaler bzw. proportionaler Abhängigkeit zu dem auf jedes der Heizelemente (R1 ... Rn) jeweils entfallenden Leistungsanteil (Pd) gesteuert werden.

2. Verfahren nach Anspruch 1, **dadurch gekennzeichnet,** daß die Teilzahl etwa 40 % der Anzahl aller Heizelemente (R1 ... Rn) entspricht.

3. Verfahren nach Anspruch 1 oder 2, **dadurch gekennzeichnet,** daß in Abhängigkeit von der Anzahl (Z) der in jedem Ansteuerzyklus jeweils zum Drucken bestimmten Heizelemente (R1 ... Rn) einzelne Sollwerte zur Steuerung der Ausgangsspannung (U), der Ansteuerdauer (T) und der Vorschubgeschwindigkeit (v) aus einem Tabellenspeicher (23) aufgerufen werden, in dem diese Werte für alle verschiedenen Anzahlen (Z) gleichzeitig ansteuerbarer Heizelemente (R1 ... Rn) einmalig ermittelt abgespeichert sind.

4. Verfahren nach Anspruch 3, **dadurch gekennzeichnet,** daß in jedem Ansteuerzyklus der in dem jeweils vorangegangenen Ansteuerzyklus ermittelte Wert für die Vorschubgeschwindigkeit (v) mit einem in dem aktuellen Ansteuerzyklus in Abhängigkeit von der Anzahl (Z) der zum Drucken bestimmten Heizelemente (R1 ... Rn) ermittelten Geschwindigkeitswert verglichen wird und daß bei Überschreitung eines vorgegebenen maximalen Beschleunigungswertes zur Erreichung dieses Geschwindigkeitswertes ein neuer, sich aus dem vorgegebenen maximalen Beschleunigungswert ergebender Geschwindigkeitswert für die Vorschubgeschwindigkeit (v) festgelegt wird, der zusammen mit den ihm in dem Tabellenspeicher (23) jeweils zugeordneten Werten für die Ausgangsspannung (U) und die Ansteuerdauer (T) jeweils zur Steuerung der Vorschubgeschwindigkeit (v), Ausgangsspannung (U) und Ansteuerdauer (T) herangezogen wird.

5. Verfahren nach einem der vorangehenden Ansprüche,
**dadurch gekennzeichnet,** daß in jedem Ansteuerzyklus aufgrund von für eine vorgegebene Anzahl von im voraus erfaßten und die jeweils zum Drucken bestimmten Heizelemente (R1 ... Rn) bezeichnenden Druckdaten die zugehörigen Geschwindigkeitswerte für die Vorschubgeschwindigkeit (v) des Aufzeichnungsträgers (10) aus dem Tabellenspeicher (23) aufgerufen werden, daß diese im voraus ermittelten Geschwindigkeitswerte jeweils mit dem Geschwindigkeitswert verglichen werden, der für den in Bezug auf den jeweils aktuellen Ansteuerzyklus vorangegangenen Ansteuerzyklus ermittelt wurde, und daß bei Überschreitung eines vorgegebenen maximalen Verzögerungswertes zur Erreichung des kleinsten der im voraus ermittelten Geschwindigkeitswerte für den jeweils aktuellen Ansteuerzyklus ein sich aus dem maximalen Verzögerungswert ergebender Wert für die Vorschubgeschwindigkeit (v) festgelegt wird, der zusammen mit den ihm in dem Tabellenspeicher (23) jeweils zugeordneten Werten für die Ausgangsspannung (U) und die Ansteuerdauer (T) jeweils zur Steuerung der Vorschubgeschwindigkeit (v), Ausgangsspannung (U) und Ansteuerdauer (T) herangezogen wird.

6. Verfahren nach Anspruch 5,
**dadurch gekennzeichnet,** daß die vorgegebene Anzahl der in jedem Ansteuerzyklus jeweils im voraus berücksichtigten Ansteuerzyklen derart bemessen ist, daß die Gesamtdauer dieser Ansteuerzyklen mit der zum Abbremsen des Vorschubs des Aufzeichnungsträgers (10) von einer maximal möglichen Vorschubgeschwindigkeit (vmax) bis zum Stillstand erforderlichen Zeit übereinstimmt.

7. Verfahren nach einem der Ansprüche 1 bis 3, **gekennzeichnet durch** folgende Verfahrensschritte:
vor dem Drucken einer Seite werden die Anzahlen (Z) der zum Drucken bestimmten Heizelemente (R1 ... Rn) für jede einzelne Mikrozeile (L) der Seite in eine Tabelle gelesen;
innerhalb der Tabelle wird die Seite in Blöcke (B1 ... B8) mit jeweils einer konstanten Anzahl von Mikrozeilen (L) aufgeteilt, wobei jeder Block (B1 ... B8) mindestens soviel Mikrozeilen (L) enthält, daß innerhalb der Blockgröße eine maximale Änderung der Vorschubgeschwindigkeit (v) des Aufzeichnungsträgers (10) möglich ist;
für jeden Block (B1 ... B8) wird in Abhängigkeit von der größten vorkommenden Anzahl der zum Drucken einer Mikrozeile (L) bestimmten Heizelemente (R1 ... Rn) ein Wert für die Ausgangsspannung (U), die Ansteuerdauer (T) und die Vorschubgeschwindigkeit (v) ermittelt.

8. Verfahren nach Anspruch 7, **gekennzeichnet durch** folgende weitere Verfahrensschritte:
die blockweise ermittelten größten vorkommenden Anzahlen (Zmax) der zum Drucken einer Mikrozeile (L) bestimmten Heizelemente werden zwischen aufeinanderfolgenden Blöcken (B1 ... B8) miteinander verglichen;
erhöht sich diese größte ermittelte Anzahl (Zmax) von einem Block (B1) auf den nächsten Block (B2), so wird die Vorschubgeschwindigkeit (v) innerhalb des vorhergehenden Blocks (B1) bis auf den Wert für den nächsten Block (B2) verringert;
ist dabei die Strecke (Regelbereich RB), die zur Änderung der Vorschubgeschwindigkeit (v) erforderlich ist, größer als der Abstand (Zmax) zwischen dem Anfang des neuen Blockes (B7) und dem Auftreten der größten Anzahl (Zmax) gleichzeitig anzusteuernder Heizelemente (R1 ... Rn), so wird die Vorschubgeschwindigkeit (v) bereits in dem vorangehenden Block (B5) auf den Wert für den neuen Block (B7) verringert;
verringert sich die größte ermittelte Anzahl (Zmax) von druckenden Heizelementen (R1 ... Rn) von einem Block (B3) auf den nächsten Block (B4), so wird die Vorschubgeschwindigkeit (v) innerhalb des neuen Blocks (B4) auf den für diesen Block (B4) ermittelten Wert erhöht;
wird dabei der Anfang des neuen Blocks (B3) von dem Regelbereich (RB) überschritten, so bleibt die Vorschubgeschwindigkeit (v) in dem neuen Block (B3) dieselbe wie in dem vorangehenden Block (B2).

9. Verfahren nach einem der vorangehenden Ansprüche,
**dadurch gekennzeichnet,** daß die Heizelemente des Thermodruckkopfes zu Gruppen zusammengefaßt werden und daß zum Drucken jeder Mikrozeile von den jeweils anzusteuernden Heizelementen diejenigen innerhalb einer Gruppe gleichzeitig und die Heizelemente unterschiedlicher Gruppen gruppenweise nacheinander angesteuert werden, wobei die Ansteuerdauer für die Heizelemente und die Vorschußgeschwindigkeit für den Aufzeichnungsträger in Abhängigkeit von der jeweils größten Anzahl zum Drucken bestimmter Heizelemente einer der Gruppen gesteuert werden.

## Claims

1. A method for thermal printing on a chart (10) by means of a thermo-printing head (1), which has a plurality of heating elements (R1...Rn) able to be controlled individually and arranged along a line extending over the width of the chart (10) to be printed, the heating elements (R1...Rn) of which in successive control cycles determined in each case for printing a micro-line during a predetermined control duration (T) are switched in parallel each time to a voltage source (2) common to all heating elements (R1..Rn), whilst the chart (10) is led past the thermoprinting head (1) transverse to the line direction, characterised in that starting from a dimensioning of the voltage source (2) for the preparation of a maximum sufficient power for the supply of only a partial number of all heating elements (R1..Rn) with in each case one maximum permissible individual power (Pdmax) for each heating element (R1...Rn), the output voltage (U) of the voltage source (2) is controlled in dependence on the number (7) of the heating elements (R1..Rn) determined in each control cycle in each case for printing such that when the number (Z) of heating elements (R1...Rn) to be controlled at the same time falls below the partial number the output voltage (U) of the voltage source (2) is regulated to a constant voltage value in which each controlled heating element (R1..Rn) is supplied respectively with the maximum permissible individual power (Pdmax), and in that when the number (Z) of heating elements (R1...Rn) to be controlled exceeds the partial number the maximum power to be prepared by the voltage source (2) is delivered, wherein the control duration (T) for the heating elements (R1...Rn) and the chart speed (v) for the chart (10) are controlled in each case in almost inversely proportional or proportional dependence on the power part (Pd) allotted respectively to each of the heating elements (R1...Rn).

2. A method according to claim 1, characterised in that the partial number corresponds approximately to 40% of the number of all heating elements (R1...Rn).

3. A method according to claim 1 or 2, characterised in that in dependence on the number (Z) of the heating elements (R1...Rn) determined respectively in each control cycle for printing, individual desired values are called up from a table memory (23) for controlling the output voltage (U), the control duration (T) and the chart speed (v), as these values are stored once they are determined for all different numbers (Z) of heating elements (R1...Rn) able to be controlled at the same time.

4. A method according to claim 3, characterised in that in each control cycle the value for the chart speed (v) determined in the respective preceding control cycle is compared with a speed value determined in the current control cycle in dependence on the number (Z) of the heating elements (R1..Rn) determined for printing, and in that when a predetermined maximum acceleration value is exceeded a new speed value for the chart speed (v), resulting from the predetermined maximum acceleration value, is fixed which, together with the values for the output voltage (U) and the control duration (T), allocated to it in each case in the table memory (23), is used in each case for controlling the chart speed (v), output voltage (U) and control duration (T).

5. A method according to one of the preceding claims, characterised in that in each control cycle, because of printing data designating a predetermined number of heating elements (R1...Rn) determined in each case for printing and detected in advance, the associated speed values for the chart speed (v) of the chart (10) are called up from the table memory (23), in that these speed values determined in advance are compared in each case with the speed value which was determined for the preceding control cycle in relation to the respective current control cycle, and in that when a predetermined maximum deceleration value is exceeded a value for the chart speed (v) resulting from the maximum deceleration value is fixed for reaching the smallest of the speed values determined in advance for the respective current control cycle, which, together with the values for the output voltage (U) and the control duration (T), allocated to it in each case in the table memory (23), is used in each case for controlling the chart speed (v), output voltage (U) and the control duration (T).

6. A method according to claim 5, characterised in that the predetermined number of the control cycles considered in advance in each case in each control cycle is measured such that the complete duration of these control cycles agrees with the time required for braking the advance of the chart (10) from a maximum possible chart speed (vmax) until stoppage.

7. A method according to one of claims 1 to 3, characterised by the following stages of method: before printing one page the numbers (Z) of the heating elements (R1...Rn) determined for printing for each individual micro-line (L) of the page are read in a table; inside the table the page is divided into blocks (B1...B8) with in each case a constant number of microlines (L), wherein each block (B1...B8) contains at least so many microlines (L) that within the block size a maximum alteration of the chart speed (V) of the chart (10) is possible; for each block (B1...B8), in dependence on the largest occurring number of heating elements (R11...Rn) determined for printing a micro-line (L), a value for the output voltage (U), the control duration (T) and the chart speed (v) is determined.

8. A method according to claim 7, characterised by the following further stages of method: the blockwise detected largest occurring numbers (Zmax) of the heating elements determined for printing one micro-line (L) are compared with each other between successive blocks (B1..B8); if this largest detected number (Zmax) increases from one block (B1) to the next block (B2) then the chart speed (v) within the preceding block (B1) is reduced to the value for the next block (B2); if thereby the distance (control range RB) which is required for changing the chart speed (v) is greater than the distance (Zmax) between the beginning of the new block (B7) and the occurrence of the largest number (Zmax) of heating elements (R1...Rn) to be controlled at the same time then the chart speed (v) is already reduced in the preceding block (B5) to the value for the new block (B7); if the largest detected number (Zmax) of printing heating elements (R1...Rn) reduces from one block (B3) to the next block (B4), then the chart speed (v) inside the new block (B4) is increased to the value detected for this block (B4); if thereby the beginning of the new block (B3) is exceeded by the control range (RB), then the chart speed (v) in the new block (B3) remains the same as in the preceding block (B2).

9. A method according to one of the preceding claims, characterised in that the heating elements of the thermo-printing head are joined to form groups and in that for printing each micro-line of the respective heating elements to be controlled those inside one group are controlled at the same time and the heating elements of different groups are controlled in groups one after the other, wherein the control duration for the heating elements and the chart speed for the chart are regulated in dependence on the respective largest number for printing certain heating elements of one of the groups.

**Revendications**

1. Procédé d'impression thermique sur un support d'enregistrement (10) au moyen d'une tête d'impression thermique (1), qui comporte une multiplicité d'éléments chauffants (R1...Rn) commandables individuellement, qui sont disposés le long d'une ligne qui s'étend sur la largeur du support d'enregistrement (10) sur lequel l'impression doit être exécutée et parmi lesquels chaque fois les éléments chauffants (R1...Rn) prévus pour l'impression respective d'une microligne, sont branchés, selon des cycles successifs de commande, en parallèle avec une source de tension (2) commune à tous les éléments chauffants (R1...Rn), pendant une durée prédéterminée de commande (T), tandis que le support d'enregistrement (10) est déplacé transversalement à la direction de la ligne, devant la tête d'impression thermique (1), caractérisé par le fait qu'à partir d'un dimensionnement de la source de tension (2) en fonction de la délivrance d'une puissance qui suffit au maximum pour l'alimentation seulement d'une partie de tous les éléments chauffants (R1...Rn) avec une puissance respective maximale admissible (Pmax) pour chaque élément chauffant (R1...Rn), la tension de sortie (U) de la source de tension (2) est commandée respectivement pour réaliser l'impression d'éléments chauffants déterminés (R1...Rn) de telle sorte que, pour un nombre (Z) dépassant le nombre partiel d'éléments chauffants (R1...Rn) devant être commandés simultanément, la tension de sortie (U) de la source de tension (2) est réglée sur une valeur de tension constante, pour laquelle chaque élément chauffant commandé (R1...Rn) est alimenté respectivement par la puissance individuelle maximale admissible (Pdmax) et que pour un nombre (Z), qui est supérieur au nombre partiel, d'éléments chauffants (R1...Rn) devant être commandés simultanément, la puissance maximale devant être fournie par la source de tension (2) est délivrée, la durée de commande (T) des éléments chauffants (R1...Rn) et la vitesse d'avance (v) du support d'enregistrement (10) étant commandées respectivement d'une manière presque inversement proportionnelle à la partie (Pd) de la puissance, qui est consommée respectivement dans chacun des éléments chauffants (R1...Rn).

2. Procédé suivant la revendication 1, caractérisé par le fait que le nombre partiel correspond à environ 40 % du nombre de tous les éléments chauffants (R1...Rn).

3. Procédé suivant la revendication 1 ou 2, caractérisé par le fait qu'en fonction du nombre (Z) des éléments chauffants (R1...Rn) utilisés respectivement pour réaliser l'impression dans chaque cycle de commande, des valeurs de consigne individuelles sont appelées pour la commande de la tension de sortie (U), de la durée de commande (T) et de la vitesse d'avance (v), à partir d'une mémoire de tableaux (23), dans laquelle ces valeurs peuvent être mémorisées, en étant déterminées une seule fois pour l'ensemble des différents nombres (Z) d'éléments chauffants (R1...Rn) pouvant être commandés simultanément.

4. Procédé suivant la revendication 3, caractérisé par le fait que dans chaque cycle de commande, la valeur déterminée pendant le cycle de commande respectivement précédent pour la vitesse d'avance (v) est comparée à une valeur de vitesse déterminée pendant le cycle actuel de commande en fonction du nombre (Z) des éléments chauffants (R1...Rn) utilisés pour l'impression, et que lors du dépassement d'une valeur d'accélération maximale prédéterminée pour atteindre cette valeur de vitesse, une nouvelle valeur de la vitesse d'avance (v), qui est obtenue à partir de la valeur d'accélération maximale prédéterminée, est fixée, cette valeur étant utilisée conjointement avec les valeurs qui lui sont respectivement associées dans la mémoire de tableaux (23), pour la tension de sortie (U) et la durée de commande (A), respectivement pour commander la vitesse d'avance (v), la tension de sortie (U) et la durée de commande (T).

5. Procédé suivant l'une des revendications précédentes, caractérisé par le fait que pendant chaque cycle de commande, sur la base de données d'impression détectée par avance et désignant les éléments chauffants (R1...Rn) destinés respectivement pour l'impression, les valeurs de vitesse associées pour la vitesse d'avance (v) du support d'enregistrement (10) sont appelées à partir de la mémoire de tableaux (23), que ces valeurs de vitesse, déterminées par avance, sont comparées respectivement à la valeur de la vitesse qui a été déterminée pour le cycle de commande qui précède le cycle respectivement actuel de commande, et que lors du dépassement d'une valeur de retard maximale prédéterminée pour l'obtention de la plus petite des valeurs de la vitesse, déterminées par avance, pour le cycle respectivement actuel de commande, une valeur déterminée à partir de la valeur maximale de retard, est fixée pour la vitesse d'avance (v), valeur qui est utilisée, conjointement avec les valeurs qui lui sont associées respectivement dans la mémoire de tableaux (23) pour la tension de sortie (U) et la durée de commande (T), respectivement pour commander la vitesse d'avance (v), la tension de sortie (U) et la durée de commande (T).

6. Procédé suivant la revendication 5, caractérisé par le fait que le nombre prédéterminé des cycles de commande respectivement pris en compte par avance dans chaque cycle de commande, est dimensionné de telle sorte que la durée totale de ces cycles de commande coïncide avec la durée nécessaire pour freiner l'avance du support d'enregistrement (10) depuis une vitesse maximale possible d'avance (vmax) jusqu'à l'arrêt.

7. Procédé suivant l'une des revendications 1 à 3, caractérisé par des étapes opératoires suivantes :
avant l'impression d'une page, les nombres (Z) des éléments chauffants (R1...Rn) destinés à être utilisés pour l'impression pour chaque microligne individuelle (L) de la page sont lus dans un tableau;
dans le tableau, la page est subdivisée en blocs (B1...B8) comportant respectivement un nombre constant de microlignes (L), chaque bloc (B1...B8) contenant au moins autant de microlignes (L) que ce qui correspond, à l'intérieur de la taille d'un bloc, à une modification maximale possible de la vitesse d'avance (v) du support d'enregistrement (10);
pour chaque bloc (B1...B8), une valeur pour la tension de sortie (U), la durée de commande (T) et la vitesse d'avance (v) est déterminée en fonction du nombre maximal, qui intervient, des éléments chauffants (R1...Rn) utilisés pour l'impression d'une microligne (L).

8. Procédé suivant la revendication 7, caractérisé par les étapes opératoires supplémentaires suivantes:
les nombres maximum possibles (Zmax), qui sont déterminés par blocs, des éléments chauffants utilisés pour l'impression d'une microligne (L) sont comparés les uns aux autres entre les blocs successifs (B1... B8);

si ce nombre maximum déterminé (Zmax) augmente d'un bloc (B1) au bloc suivant (B2 ), la vitesse d'avance (v) à l'intérieur du bloc précédent (B1) est réduit à une valeur pour le bloc suivant (B2);

si la section (plage de réglage RB), qui est nécessaire pour modifier la vitesse d'avance (v), est supérieure à la distance (Zmax) entre le début du nouveau bloc (B7) et l'apparition du nombre maximum (Zmax) d'éléments chauffants (R1...Rn) devant être commandés simultanément, la vitesse d'avance (v) est réduite, déjà dans le bloc précédent (B5), à la valeur prévue pour le nouveau bloc (B7);

si le nombre maximum déterminé (Zmax) d'éléments chauffants (R1...Rn) exécutant une impression diminue d'un bloc (B3) au bloc suivant (B4), la vitesse d'avance (v) à l'intérieur du nouveau bloc (B4) augmente en passant à la valeur déterminée pour ce bloc (B4);

si le début du nouveau bloc (B3) est dépassé par la plage de réglage (RB), la vitesse d'avance (v) dans le nouveau bloc (B3), reste identique à ce qu'elle était dans le bloc précédent (B2).

9. Procédé suivant l'une des revendications précédentes, caractérisé par le fait que les éléments chauffants de la tête d'impression thermique sont réunis selon des groupes et que pour l'impression de chaque microligne, parmi les éléments chauffants devant être respectivement commandés, ceux situés dans un groupe sont commandés simultanément et les éléments chauffants de groupes différents sont commandés successivement par groupes, la durée de commande des éléments chauffants et la vitesse d'avance du support d'enregistrement étant commandés en fonction du nombre respectivement maximum d'éléments chauffants, qui sont utilisés pour l'impression, de l'un des groupes.

FIG 1

EP 0 403 477 B1

FIG 2

FIG 4

Vorangegangener Ansteuerzyklus

Bestimmung der in dem aktuellen Ansteuerzyklus und den folgenden n Ansteuerzyklen auftretenden Anzahlen gleichzeitig anzusteuernder Heizelemente

Ermittlung der den auftretenden Anzahlen zugeordneten Sollwerte für die Vorschubgeschwindigkeit aus dem Tabellenspeicher 23

Erfordert einer dieser Sollwerte in bezug auf die momentane Vorschubgeschwindigkeit eine dem maximal zulässigen Verzögerungswert entsprechende Abbremsung des Aufzeichnungsträgers 10?

Ja                                                                    Nein

Erfordert der für den aktuellen Ansteuerzyklus ermittelte Sollwert der Vorschubgeschwindigkeit eine den maximal zulässigen Beschleunigungswert überschreitende Beschleunigung?

Ja                                                                    Nein

| Einen neuen Sollwert für die Vorschubgeschwindigkeit aufgrund des maximal zulässigen Verzögerungswertes bzw. Beschleunigungswertes festsetzen | Der für den aktuellen Ansteuerzyklus ermittelte Sollwert der Vorschubgeschwindigkeit bleibt unverändert. |

Aufgrund des ermittelten Sollwertes für die Vorschubgeschwindigkeit die zugehörigen Sollwerte für die Ausgangsspannung und Ansteuerdauer aus dem Tabellenspeicher 23 aufrufen und zur Steuerung der Vorschubgeschwindigkeit, Ausgangsspannung und Ansteuerdauer ausgeben.

Nächster Ansteuerzyklus

# FIG 3

FIG 5

FIG 6